# EUROPÄISCHE PATENTANMELDUNG

(11) **EP 2 634 756 A2**
(43) Veröffentlichungstag der Anmeldung: **04.09.2013**
(21) Anmeldenummer: 13171261.4
(22) Anmeldetag: 10.06.2013
(51) Int. Cl.: G08B 17/10, G08B 25/08

(54) **Tabakrauchmelder**

(71) Anmelder: Siemens Aktiengesellschaft, 80333 München (DE)
(72) Erfinder: Hoefer, Ulrich, Dr., 6317 Oberwil (CH)

(57) **Zusammenfassung**

Tabakrauchmelder mit einer gassensitiven Halbleitersensoreinrichtung (insb. GasFET-Sensor) mit einer ersten gassensitiven Schicht, die auf Tabakrauch reagiert und einer zweiten gassensitiven Schicht, die auf Brandprodukte reagiert, sowie einer Auswerteeinheit (z.B. Mikrochip) zur Analyse der von der ersten und der zweiten gassensitiven Schicht gelieferten Signale und zur Bestimmung, ob ein Tabakrauch vorliegt. Optional umfasst der Tabakrauchmelder eine Schnittstelle zur signal- oder datentechnischen Verbindung mit einem Gefahrenmelder und/oder einer Gefahrenmeldezentrale und/oder einer Ausgabevorrichtung, insbesondere zur Übermittlung einer Information, ob Tabakrauch vorliegt. Optional kann der Tabakrauchmelder in einen konventionellen Gefahrenmelder (z.B. Brandmelder) operativ integriert werden.

## Beschreibung

Die Erfindung betrifft einen Tabakrauchmelder zur Bestimmung, ob ein Tabakrauch vorliegt. Weiterhin betrifft die Erfindung Gefahrenmelder umfassend einen Tabakrauchmelder. Ausserdem betrifft die Erfindung eine Gefahrenmeldeanlage mit Gefahrenmeldern und Tabakrauchmeldern. Ferner betrifft die Erfindung ein Verfahren zur Unterscheidung von Tabakrauch und Brandrauch.

Zum Schutz der nichtrauchenden Bevölkerung ist es in den meisten öffentlichen Einrichtungen weltweit untersagt zu rauchen. Zudem führt Rauchen zur Geruchsbelästigung, insbesondere in Hotelzimmern. Bei Zuwiderhandlungen müssen Hotelzimmer aufwendig mit Ozonisatoren gereinigt werden, was zusätzliche Kosten und Ärger verursacht. Zudem besteht an Orten an denen trotzdem geraucht wird (Räume, Gänge, Flure) eine latente Brandgefahr, da wegen des Rauchverbots keine entsprechenden Einrichtungen zur Entsorgung der möglicherweise noch glühenden Asche bzw. Zigarettenstummel, bereitgestellt sind. Die Erleichterung der Kontrolle bzw. das frühzeitige Anzeigen einer Zuwiderhandlung gegen das Rauchverbot könnte gerade hier für zusätzliche Sicherheit sorgen. Im Hotel kann es zudem dem Gast als auch dem Hotelbetreiber Unannehmlichkeiten ersparen.

Herkömmliche Brandmelder können nicht zwischen Brandrauch und Zigarettenrauch unterscheiden und tendieren deshalb weiterhin zu Fehlalarmen, d.h. durch die Detektion von Zigarettenrauch wird ein Brandalarm ausgelöst.

Es ist daher die Aufgabe der vorliegenden Erfindung, einen Rauchmelder zur Verfügung zu stellen, der Tabakrauch selektiv erkennen kann.

Die Aufgabe wird gelöst durch einen Tabakrauchmelder, insbesondere zur Erkennung von Zigarettenrauch, der Tabakrauchmelder umfassend:
- eine gassensitive Halbleitersensoreinrichtung mit einer ersten gassensitiven Schicht, die auf Tabakrauch reagiert und einer zweiten gassensitiven Schicht, die auf Brandprodukte reagiert;
- eine Auswerteeinheit zur Analyse der von der ersten und der zweiten gassensitiven Schicht gelieferten Signale und zur Bestimmung, ob ein Tabakrauch vorliegt; und
- eine Schnittstelle zur signal- oder datentechnischen Verbindung mit einem Gefahrenmelder und/oder einer Gefahrenmeldezentrale und/oder einer Ausgabevorrichtung, insbesondere zur Übermittlung einer Information, ob Tabakrauch vorliegt. Der Tabakrauchmelder stellt eine Überwachungseinrichtung dar, die Zigarettenrauch in Zimmern bzw. öffentlichen Gebäuden frühzeitig eindeutig identifiziert und es ermöglicht ad hoc geeignete Massnahmen zu ergreifen. So könnte ein in jedem Zimmer oder in öffentlichen Einrichtungen sowieso üblicherweise vorhandener Brandmelder, wenn er über einen derartigen, selektiv Tabakrauch, insbesondere Zigarettenrauch, erkennenden Tabakrauchmelder verfügt, hierzu verwendet werden und die Überwachungsfunktion übernehmen. Im Brandfall gibt er Alarm, im Fall von Zigarettenrauch gibt er eine Informationsmeldung an eine zentrale Einrichtung (z.B. Hotelrezeption, Hotelmanagementsystem, Hauswart). Der Tabakrauchmelder kann somit als separater Tabakrauchmelder (insb. Zigarettenrauchmelder) unabhängig von vorhandenen Brandmeldern bzw. Brandmeldezentralen ausgebildet bzw. im operativen Betrieb sein. Es ist aber auch möglich, den erfindungsgemässen Tabakrauchmelder mit einem herkömmlichen Brandmelder bzw. einem Brandmeldersystem oder einer Brandmeldezentrale operativ zu betreiben. Der erfindungsgemässe Tabakrauchmelder ermöglicht es dediziert Tabakrauch zu erkennen und von echten Brandphänomenen zu unterscheiden. Somit ist insbesondere die Abgabe von entsprechend differenzierten Meldungen möglich.

Die von der ersten und der zweiten gassensitiven Schicht gelieferten Signale basieren auf dem Prinzip der Austrittsarbeitsänderung, der Leitfähigkeitsänderung oder einem anderen Transducer-Prinzip. Die Bestimmung, ob Tabakrauch vorliegt, erfolgt in der Auswerteeinheit (z.B. ein Mikrochip) durch Analyse der von den gassensitiven Schichten gelieferten Signalmuster.

Halbleiter-Gassensoren auf Basis von gassensitiven Feldeffekttransistoren(GasFET) sind klein, durch Massenproduktion verhältnismässig billig herzustellen und benötigen im Vergleich zu herkömmlichen Brandmeldern eine weniger komplexe Signalauswertung. GasFET's sind Feldeffekttransistoren mit einem Sourcebereich, einem Kanalbereich, einem Drainbereich und einer gassensitiven Gateelektrode.

Ein solcher Feldeffekttransistor ist beispielsweise wie folgt realisiert: An einen Kanalbereich grenzen ein wannenförmiger Sourcebereich und ein wannenförmiger Drainbereich. Diese drei Bereiche befinden sich auf der Oberfläche eines Grundkörpers und sind über eine Gate-Isolierung geschützt. Das gassensitive Gate weist einen definierten Abstand zur Gate-Isolierung bzw. zum Grundkörper auf ("suspended gate"). Die Gate-Elektrode ist mit einem spezifischen gassensitiven Material beschichtet und durch einen Luftspalt vom aktiven Kanalbereich gerennt. In den Spalt gelangen über Diffusion gasförmige Bestandteile. Im Brandfall erreichen somit auch Rauchgasmoleküle den Gate-Bereich und wechselwirken mit der gassensitiven Schicht über Ad- bzw- Desorptionsmechanismen Durch diese Wechselwirkung der Rauchgasmoleküle mit der gassensitiven Schicht verändert sich am Gate die Austrittsarbeit und es resultiert ein verändertes elektrisches Potential, das sich der angelegten Gatespannung additiv überlagert. Dadurch wird der Kanalbereich kapazitiv angesteuert. Die Änderung der Kanalleitfähigkeit kann beispielsweise bei festgehaltener Drain-Source-Spannung als Änderung des Drain-Stromes detektiert werden

Derartige gassensitive Feldeffekttransistoren können über diskrete, einzelne gassensitive Kanäle verfügen oder können auch mehrere unterschiedliche Kanäle in einem Chip vereinen (Array). Eine erste vorteilhafte Ausgestaltung der Erfindung liegt darin, dass die erste gassensitive Schicht eine TiN-Schicht und/oder eine Pd-Schicht und/oder eine Rh-Schicht und/oder eine Pt-Schicht aufweist. TiN (Titannitrid; Verbindung der chemischen Elemente Titan und Stickstoff), Pd (Palladium), Rh (Rhodium) und Pt (Platin) als gassensitive Schichten reagieren auf Tabakrauch mit einer Änderung der Austrittsarbeit (z.B. gemessen in meV). TiN, Pd, Rh und Pt reagieren auf das im Tabakrauch enthaltene Ammoniak (NH3), wobei TiN praktisch ausschliesslich auf Ammoniak reagiert.

Eine weitere vorteilhafte Ausgestaltung der Erfindung liegt darin, dass die zweite gassensitive Schicht eine GaOx- und/oder eine CuPC-Schicht aufweist. Sowohl GaOx (Galliumoxid) als auch CuPC (Kupferphthalocyanin) reagieren nicht auf Tabakrauch, aber auf Brandrauch. Zum Beispiel bei einem Papierbrand reagieren GasEFT's mit GaOx- und auch CuPC-Schichten in negative Richtung (in meV). Der Grund für diese Reaktion ist der N0₂-Anteil im gasförmigen Anteil der Brandprodukte. TiN reagiert hierauf praktisch nicht.

Durch die Auswertung der durch die gassensitiven Schichten gemessenen Signale ist somit eine differenzierte und eindeutige Bestimmung, ob Tabakrauch oder ob ein echter Brandrauch (z.B. Papierbrand) vorliegt, möglich (sofern keine anderen NH3-emittierenden Brandstoffe vorhanden sind).

Eine weitere vorteilhafte Ausgestaltung der Erfindung liegt darin, dass die erste gassensitive Schicht eine TiN-Schicht und die zweite gassensitive Schicht eine GaOx-Schicht und/oder eine CuPC-Schicht und/oder eine Pd-Schicht und/oder eine Rh-Schicht und/oder eine Pt-Schicht aufweist.

Aufgrund des Ammoniak Anteils der auch bei speziellen anderen Bränden entstehen kann (Wolle), besteht jedoch bei der Berücksichtigung nur einer einzelnen TiN-Schicht eine Verwechslungsgefahr mit echten Bränden.

Auch die ausschliessliche Verwendung der Pt-Schicht ermöglicht keine differenzierte Entscheidung, ob Tabakrauch oder Brandrauch vorliegt, da Pt sowohl auf das Ammoniak im Tabakrauch als auch insbesondere auf den N0₂-Anteil im gasförmigen Anteil von Brandprodukten reagiert (in negativer Richtung gemessen in meV). Da TiN hierauf praktisch nicht reagiert, ist auch in dieser Ausgestaltung eine differenzierte und eindeutige Bestimmung, ob Tabakrauch oder ob ein echter Brandrauch (z.B. Papierbrand) vorliegt, möglich.

Eine weitere vorteilhafte Ausgestaltung der Erfindung liegt darin, dass der Tabakrauchmelder eine Ausgabeeinheit zur optischen und/oder akustischen Ausgabe eines Rauchverbothinweises umfasst. Bei der Ausgabeeinheit kann es sich z.B. um einen Lautsprecher handeln, der bei der Detektion von Zigarettenrauch eine Meldung der folgenden Art ausgibt: "Bitte das Rauchen einstellen". Bei der Ausgabeeinheit kann es sich aber auch um ein grafisches Display handeln, auch welchem eine Rauchverbotsmeldung (textuell und/oder grafisch) ausgegeben wird. Dem Fachmann ist klar, dass sowohl ein akustischer und ein visueller Rauchverbotshinweis gleichzeitig ausgegeben werden kann. Weiterhin kann bei der Detektion von Zigarettenrauch auch zusätzlich eine zentrale Leitstelle (z.B. Hotelmanagementsystem) informiert werden, vorteilhafterweise mit Angabe des Standortes des Tabakrauchmelders.

Eine weitere vorteilhafte Ausgestaltung der Erfindung liegt darin, dass der Tabakrauchmelder beim Erkennen von Tabakrauch entsprechende Lüftungsmassnahmen in der Umgebung des Raumes, in dem sich der Tabakrauchmelder befindet, einleitet. Es kann in der entsprechenden Räumlichkeit z.B. die Lüftung aktiviert werden oder ein Fenster geöffnet werden, wenn es die Witterung erlaubt. Durch diese Lüftungsmassnahmen wird die Geruchsbelästigung gering gehalten und zusätzlich wird der Raucher auf sein Fehlverhalten aufmerksam gemacht.

Eine weitere vorteilhafte Ausgestaltung der Erfindung liegt darin, dass der Tabakrauchmelder in einem Gefahrenmelder zur Erkennung von Gefahren in einem Gebäude integriert ist. Durch die Kombination bzw. Integration von Brand- und Tabakrauchmelder muss keine zusätzliche Montage vorgenommen werden. Auch wird ein Raum nicht mit Meldern optisch überlastet.

Die Aufgabe wird weiterhin gelöst durch einen Gefahrenmelder, insbesondere Punktmelder, zur Erkennung von Gefahrensituationen in einem Gebäude, umfassend einen erfindungsgemässen Tabakrauchmelder. Durch die Kombination bzw. Integration von Gefahrenmelder und Tabakrauchmelder muss keine zusätzliche Montage vorgenommen werden. Weiterhin ist sichergestellt, dass der Gefahrenmelder keinen Fehlalarm aufgrund von Zigarettenrauch ausgibt.

Eine weitere vorteilhafte Ausgestaltung der Erfindung liegt darin, dass es sich beim Gefahrenmelder um einen Brandmelder handelt, der eine optische Messkammer aufweist. Optische Brand- oder Rauchmelder weisen eine nach dem Streuprinzip arbeitende optische Detektoreinheit (optische Messkammer) zur Detektion von Rauchpartikeln auf. Optische Brand- oder Rauchmelder können alternativ oder zusätzlich eine nach dem akustooptischen Prinzip arbeitende Detektoreinheit und/oder einen oder mehrere Gassensoren zur Detektion brandtypischer Gase aufweisen. Dadurch wird die Ausfallsicherheit des Gefahrenmelders erhöht und weiterhin werden mehrere Brandkenngrössen erfasst.

Die Aufgabe wird weiterhin gelöst durch eine Gefahrenmeldeanlage mit einer Alarmzentrale, einer Melderschleife an der die Alarmzentrale und Gefahrenmelder, insbesondere Brandmelder, angeschlossen sind, wobei an dieser Melderschleife zusätzlich zu den Gefahrenmeldern mindestens ein erfindungsgemässer Tabakrauchmelder angeschlossen ist, wobei dem mindestens einem Tabakrauchmelder eine zusätzliche Zentrale zugeordnet ist, die eingerichtet ist, Signale von einem oder von mehreren Tabakrauchmeldern zu analysieren und weiterhin eingerichtet ist, basierend auf den Signalen geeignete Massnahmen in der Umgebung eines Raumes, in dem sich ein Signal absetzender Tabakrauchmelder befindet, einzuleiten.

Derartige Gefahrenmeldeanlagen können insbesondere Brandmeldeanlagen mit einer Brandmeldezentrale und an einen die Melderschleife bildenden Bus angeschlossenen Brandmeldern und/oder Tabakrauchmeldern und ein an den Bus angeschlossenen Hotelmanagementsystem sein. Bei Brandmeldeanlagen war es bisher nicht zulässig, auf der Melderschleife zusätzlich noch andere Geräte zu betreiben, weil man befürchtet hat, dass die Funktion der Brandmeldeanlage durch diese anderen Geräte beeinträchtigt werden könnte. Es wurde befürchtet, dass im Alarmfall so viele Meldungen abgesetzt werden könnten, dass der Bus blockiert wird und die Brandmelder nicht mehr ihre Alarmmeldungen schicken können. Aber heutzutage sind die Melderschleifen robust und von der Bandbreite so ausgelegt, dass auch Worst-Case-Szenarien wie z.B. Meldungsschauer verarbeitet werden können. Dadurch dass die Alarmzentrale und die zusätzliche Zentrale (z.B. Hotelmanagementsystem oder Hotelrezeption) und die einzelnen Melder durch eine einzige Melderschleife kommunizieren, wird der Verkabelungsaufwand verringert.

Die erfindungsgemässe Gefahrenmeldeanlagen ermöglicht u.a. das Zusammenspiel von sicherheitsrelevanten und nicht sicherheitsrelevanten Geräten an einem Bus mit einer Brandmeldezentrale und einer weiteren (nicht sicherheitsrelevanten) Zentrale (z.B. Hotelmanagementsystem).

Eine weitere vorteilhafte Ausgestaltung der Erfindung liegt darin, dass die Kommunikation zwischen den Gefahrenmeldern und der Alarmzentrale und die Kommunikation zwischen den Tabakrauchmeldern und der zusätzlichen Zentrale in verschiedenen Zeitfenstern erfolgt. Dadurch ist sichergestellt, dass auf der Melderschleife ein problemloser gleichzeitiger Betrieb von Gefahrenmeldern (z.B. Brandmeldern) und anderen Geräten wie z.B. Tabakrauchmeldern möglich ist.

Eine weitere vorteilhafte Ausgestaltung der Erfindung liegt darin, dass Mittel zum wahlweisen Durchschalten der Melderschleife an einer der beiden Zentralen vorgesehen sind. Das Durchschalten der Melderschleife an eine der Zentralen erfolgt vorzugsweise durch ein von der Alarmzentrale gesteuertes Schaltmittel (z.B. durch einen Monitor-, Locking- oder Semaphor Mechanismus).

Eine weitere vorteilhafte Ausgestaltung der Erfindung liegt darin, dass Mittel zum Behandeln der Meldungen der Gefahrenmelder mit Priorität und zum Unterdrücken des Durchschaltens der Melderschleife auf die zusätzliche Zentrale vorgesehen sind. Die Meldungen von Gefahrenmeldern werden vorzugsweise mit Priorität behandelt und unterdrücken das Durchschalten der Melderschleife auf die mindestens eine andere zusätzliche Zentrale. Meldungen eines Gefahrenmelders können z.B. ein Prioritätsbit enthalten, das von der Melderschleife abgefragt und erkannt wird. Bei Erkennen eines Prioritätsbits unterdrückt die Melderschleife das Durchschalten von Meldungen von den anderen Geräten (z.B. Tabakrauchmelder).

Es ist auch möglich, dass die Priorität von Meldungen von Gefahrenmeldern und das Unterdrücken des Durchschaltens von Meldungen der anderen Geräte durch einen Synchronisationsmechanismus (z.B. mit Semaphoren, Locking oder Monitoren) realisiert wird.

Eine weitere vorteilhafte Ausgestaltung der Erfindung liegt darin, dass es sich bei den geeigneten einzuleitenden Massnahmen um eine Ausgabe eines Rauchverbothinweises und/oder um eine entsprechende Lüftungsmassnahme handelt. Es kann z.B. in der entsprechenden Räumlichkeit bei der Detektion von Tabakrauch automatisch die Lüftung aktiviert werden oder ein Fenster geöffnet werden. Durch diese Lüftungsmassnahmen wird die Geruchsbelästigung gering gehalten und zusätzlich wird der Raucher auf sein Fehlverhalten aufmerksam gemacht.

Eine weitere vorteilhafte Ausgestaltung der Erfindung liegt darin, dass es sich bei der zusätzlichen Zentrale um ein Hotelmanagementsystem handelt. Vom Hotelmanagementsystem können direkt Massnahmen eingeleitet werden, wie z.B. benachrichtigen des Reinigungspersonals, dass in den entsprechenden Räumlichkeiten eine besondere Lüftung oder Ozonisation erforderlich ist. Eine andere Massnahme wäre z.B. das Vorbeischicken von Hotelpersonal, um auf das Rauchverbot hinzuweisen.

Die Aufgabe wird weiterhin gelöst durch ein Verfahren zur Unterscheidung von Tabakrauch und Brandrauch, wobei Signale einer ersten gassensitiven Beschichtung, die auf Tabakrauch reagiert, erfasst werden; wobei weiterhin Signale einer zweiten gassensitiven Beschichtung, die auf Brand reagiert, erfasst werden; und wobei basierend auf den von der ersten und der zweiten gassensitiven Beschichtung gelieferten Signalmustern durch eine Auswerteeinheit bestimmt wird, ob ein Tabakrauch und/oder ein Brandrauch vorliegt, wobei die erste gassensitive Beschichtung auf Ammoniak reagiert, und die zweite gassensitive Beschichtung auch auf andere Brandgaskomponenten reagiert.

Die von der ersten und der zweiten gassensitiven Schicht gelieferten Signale basieren auf dem Prinzip der Austrittsarbeitsänderung, der Leitfähigkeitsänderung oder einem anderen Transducer-Prinzip. Die Bestimmung, ob Tabakrauch vorliegt, erfolgt in der Auswerteeinheit (z.B. ein Mikrochip) durch Analyse der von den gassensitiven Schichten gelieferten Signalmuster. Die Analyse erfolgt in der Auswerteeinheit durch entsprechende Software oder Firmware.

Eine weitere vorteilhafte Ausgestaltung der Erfindung liegt darin, dass die erste gassensitive Beschichtung eine TiN-Schicht und die zweite gassensitive Beschichtung durch eine Schicht aus organischen Porphinfarbstoffen und/oder eine Schicht aus organischen Polymeren und/oder anorganischen Stoffen gebildet ist. Die TiN-Schicht reagiert auf Ammoniak (NH₃), das durch Tabakrauch freigesetzt wird. Allerdings wird auch bei Bränden mit Wolle ein Ammoniakanteil freigesetzt. Die zweite gassensitive Beschichtung reagiert auf Gase, die bei einem Brand freigesetzt werden. Durch die Auswertung der von der ersten und der zweiten gassensitiven Beschichtung gelieferten Signale ist eine differenzierte Entscheidung möglich, ob Tabakrauch (d.h. keine unmittelbare Gefahrensituation) oder Brandrauch (unmittelbare Gefahrensituation) vorliegt.

Bei den organischen Porphinfarbstoffen kann es sich z.B. um Phthalocyanine (z.B. CuPC-Kupferphtalocyanin), Porphyrine oder Cobyrinate handeln. Bei den organischen Polymere kann es sich z.B. um Polysiloxane, Polycarbonate oder Polyimide handeln. Bei den anorganischen Stoffen kann es sich z.B. um Oxide, Karbonate, Phosphate, Halogenide oder Metalle handeln.

Eine weitere vorteilhafte Ausgestaltung der Erfindung liegt darin, dass es sich bei den anorganischen Stoffen um Oxide und/oder Karbonaten und/oder Phosphaten und/oder Halogeniden und/oder Metallen handelt.

Eine weitere vorteilhafte Ausgestaltung der Erfindung liegt darin, dass es sich bei den Metallen um Platin und/oder Paladium und/oder Gold und/oder Nickel und/oder Rhodium handelt.

Die gassensitiven Schichten sind üblicherweise als GasFET-Sensorschichten in Halbleiter-Gassensoren realisiert, wobei ein Halbleiter-Gassensor eine oder mehrere gassensitiven Schichten umfassen kann. Es ist aber auch möglich mehrere Halbleiter-Gassensoren zu verwenden, die jeweils eine oder mehrere gassensitive Schichten umfassen können.

Die Erfindung sowie vorteilhafte Ausführungen der vorliegenden Erfindung werden am Beispiel der nachfolgenden Figuren erläutert. Dabei zeigen:
- FIG 1: einen ersten beispielhaften erfindungsgemäßen Tabakrauchmelder, angeschlossen an einer Melderschleife,
- FIG 2: einen zweiten beispielhaften erfindungsgemäßen Tabakrauchmelder, angeschlossen an einer Melderschleife,
- FIG 3: einen dritten beispielhaften erfindungsgemäßen Tabakrauchmelder mit Ausgabevorrichtung am Melderscheitel,
- FIG 4: einen beispielhaften Gefahrenmelder mit integriertem erfindungsgemäßen Tabakrauchmelder, angeschlossen an einer Melderschleife,
- FIG 5: eine beispielhafte Gefahrenmeldeanlage mit an einer Melderschleife angeschlossenen Tabakrauchmeldern und Gefahrenmeldern, sowie einer Brandmeldezentrale und einer zusätzlichen Zentrale,
- FIG 6: ein beispielhaftes Diagramm, das die Reaktion unterschiedlicher (GasFET-)Sensorschichten auf Tabakrauch darstellt,

- FIG 7: ein beispielhaftes Diagramm, das die Reaktion unterschiedlicher (GasFET-)Sensorschichten bei einem Papierbrand darstellt,
- FIG 8: ein beispielhaftes Diagramm, das die Reaktion unterschiedlicher (GasFET-)Sensorschichten bei einem typischen Holz-Schwelbrand darstellt,
- FIG 9: ein beispielhaftes Diagramm mit Signalmustern von unterschiedlichen (GasFET-)Sensorschichten und eines konventionellen Brandmelders zur Unterscheidung von Tabakrauch von einem echten Brand, und
- FIG 10: ein beispielhaftes Ablaufdiagramm für das erfindungsgemässe Verfahren.

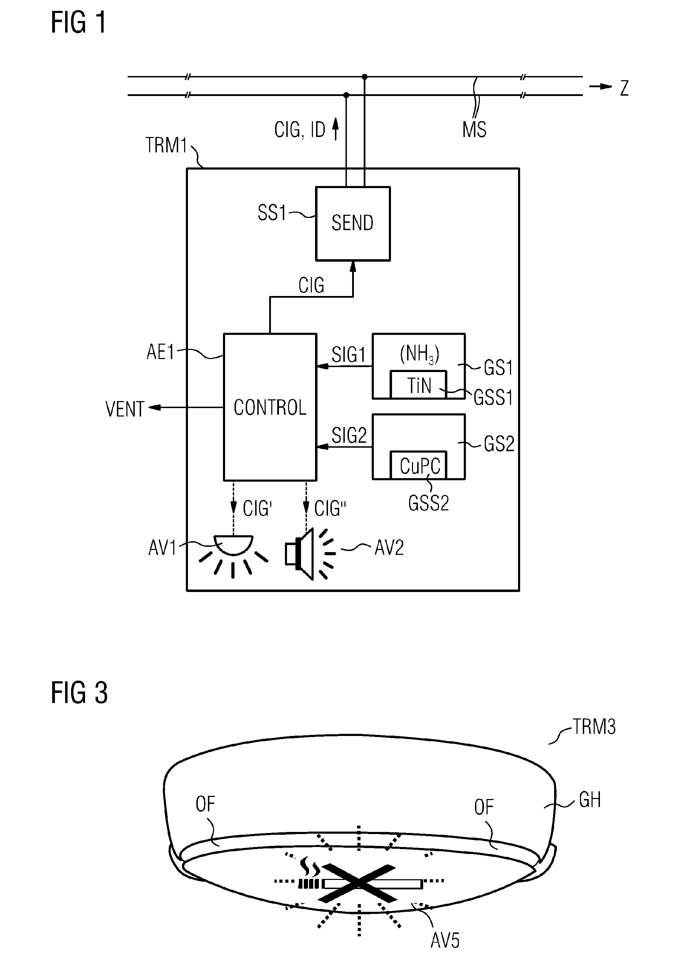

Figur 1 zeigt einen ersten beispielhaften erfindungsgemäßen Tabakrauchmelder TRM1, angeschlossen an einer Melderschleife MS. Über die Melderschleife MS ist der Tabakrauchmelder TRM1 mit einer zentralen Leitstelle Z (z.B. eine Brandmeldezentrale oder ein Hotelmanagementsystem) verbunden. An der Melderschleife MS hängen üblicherweise noch weitere Melder (Gefahrenmelder, wie z.B. Brandmelder und/oder weitere Tabakrauchmelder TRM1).

Der beispielhafte Tabakrauchmelder TRM1 gemäss der Darstellung in Figur 1 umfasst eine erste gassensitive Halbleitersensoreinrichtung GS1 mit einer gassensitiven Schicht GSS1, die auf Tabakrauch reagiert. Im beispielhaften Tabakrauchmelder TRM1 wird als gassensitive Schicht GSS1, die auf Tabakrauch reagiert, beispielshaft eine TiN-Schicht verwendet (Titannitrid; Verbindung der chemischen Elemente Titan und Stickstoff). Weiterhin umfasst der beispielhafte Tabakrauchmelder TRM1 eine zweite gassensitive Halbleitersensoreinrichtung GS2 mit einer gassensitiven Schicht GSS2, die auf Brandprodukte reagiert. Beispielhafterweise umfasst die zweite gassensitive Halbleitersensoreinrichtung GS2 als gassensitiven Schicht GSS2, die auf Brandprodukte reagiert, eine CuPC-Schicht (Kupferphthalocyanin). Als gassensitive Schicht GSS2, die auf Brandprodukte reagiert, könnte auch eine andere geeignete Beschichtung wie z.B. eine GaOx-Schicht (Galliumoxid) verwendet werden.

Jede der gassensitiven Halbleitersensoreinrichtungen GS1 bzw. GS2 kann jeweils eine oder mehrere geeignete gassensitiven Schichten GSS1 bzw. GSS2 umfassen. Der beispielhafte Tabakrauchmelder TRM1 gemäss der Darstellung in Figur 1 enthält zwei Halbleitersensoreinrichtungen GS1 bzw. GS2. Es ist aber auch möglich, dass ein Tabakrauchmelder TRM1 nur eine Halbleitersensoreinrichtung GS1 enthält, wobei diese eine Halbleitersensoreinrichtung GS1 die gassensitiven Schichten GSS1 (zur Tabakraucherkennung) und GSS2 (zur Branderkennung) umfasst. Auch in der Ausgestaltung mit zwei Halbleitersensoreinrichtung GS1 und GS2 können diese jeweils mehrere gassensitiven Schichten GSS1 (zur Tabakraucherkennung) und GSS2 (zur Branderkennung) umfassen.

Der beispielhafte Tabakrauchmelder TRM1 gemäss der Darstellung in Figur 1 umfasst weiterhin eine Auswerteeinheit AE1 (CONTROL) zur Analyse der von der ersten und der zweiten Halbleitersensoreinrichtung GS1, GS2 gelieferten Signale SIG1 bzw. SIG2 und zur Bestimmung, ob ein Tabakrauch vorliegt. Die von den gassensitiven Schichten GSS1 bzw. GSS2 gelieferten Signale SIG1 bzw. SIG2 basieren auf dem Prinzip der Austrittsarbeitsänderung, der Leitfähigkeitsänderung oder einem anderen Transducer-Prinzip. Die Bestimmung, ob Tabakrauch vorliegt, erfolgt in der Auswerteeinheit AE1 (z.B. ein Mikrochip) durch Analyse der von den gassensitiven Schichten GSS1, GSS2 gelieferten Signalmuster. Die Analyse erfolgt in der Auswerteeinheit AE1 durch entsprechende Software oder Firmware.

Weiterhin umfasst der beispielhafte Tabakrauchmelder TRM1 eine Schnittstelle SS1 zur signal- oder datentechnischen Verbindung mit einem Gefahrenmelder und/oder einer Gefahrenmeldezentrale und/oder einer Ausgabevorrichtung, insbesondere zur Übermittlung einer Information CIG, ob Tabakrauch vorliegt. Die signal- und/oder datentechnische Verbindung mit einem Gefahrenmelder und/oder einer Gefahrenmeldezentrale und/oder einer Ausgabevorrichtung erfolgt durch die Verbindung der Schnittstelle (SEND) SS1 mit der Melderschleife MS. Die Information CIG zeigt dabei an, dass Tabakrauch erkannt wurde, durch das Identifikationssignal ID wird angezeigt, von welchem Tabakrauchmelder TRM1 das Signal CIG gemeldet wird. An der zentralen Stelle Z (z.B. Hotelmanagementsystem. Hotelrezeption) können, basierend auf dieser Information, in der räumlichen Umgebung des einsprechenden Tabakrauchmelders TRM1 dedizierte Massnahmen (z.B. Beauftragung des Personals einen Kontrollgang vorzunehmen) eingeleitet werden. Basierend auf dem Identifikationssignal ID kann in der Zentrale Z leicht der räumliche Anbringungsort des Tabakrauchmelders TRM1 ermittelt werden.

Es ist aber auch möglich, dass durch die Auswerteeinheit AE1 des Tabakrauchmelders TRM1 autark, basierend auf der Analyse der von den gassensitiven Schichten GSS1, GSS2 gelieferten Signalmuster, Massnahmen eingeleitet werden. So kann z.B. durch das Absetzen eines Lüftungssignals VENT, für den Raum in dem sich der Tabakrauchmelders TRM1 befindet, eine dedizierte Lüftungsmassnahme (z.B. Fensteröffnen, Lüftung aktivieren) eingeleitet werden. Weiterhin kann durch die Auswerteeinheit AE1 des Tabakrauchmelders TRM1 auch autark eine Ausgabevorrichtung AV1, AV2 aktiviert werden. In Figur 1 sind als Ausgabevorrichtungen AV1, AV2 beispielshaft eine optische Ausgabevorrichtung AV1 zur Ausgabe eines Licht- oder Leuchtsignals und eine akustische Ausgabevorrichtung AV1 (Lautsprecher) zur Ausgabe eines Tons und/oder einer Ansage (z.B. Ausgabe eines Meldungstextes) vorgesehen. Die Ausgabevorrichtungen AV1, AV2 werden durch das entsprechende Signal CIG' bzw. CIG" angesteuert.

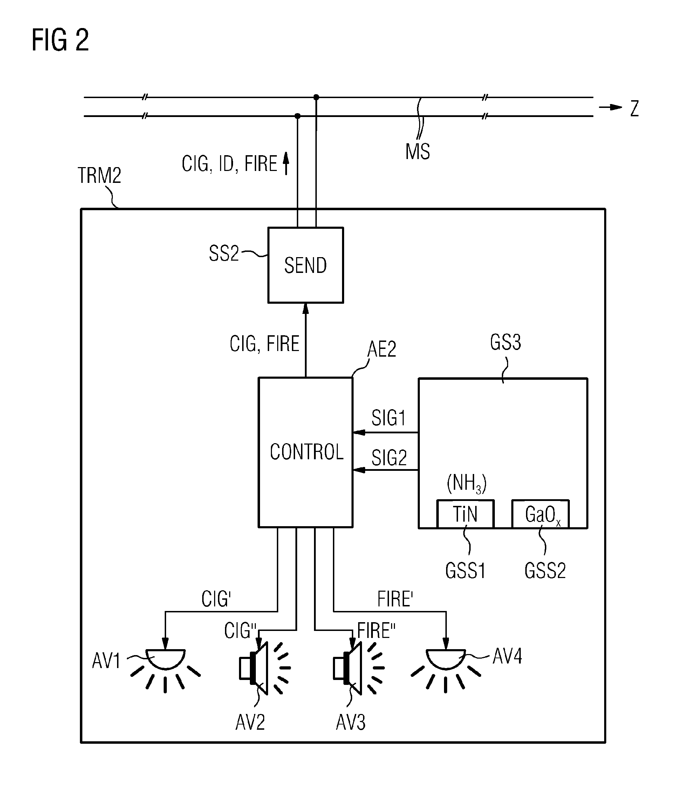

Figur 2 zeigt einen zweiten beispielhaften erfindungsgemäßen Tabakrauchmelder TRM2, angeschlossen an einer Melderschleife MS. Über die Melderschleife MS ist der beispielhafte Tabakrauchmelder TRM2 mit einer zentralen Leitstelle Z verbunden. Der beispielhafte Tabakrauchmelder TRM 2 gemäss Figur 2 umfasst eine gassensitive Halbleitersensoreinrichtung GS3 (Gassensor) mit einer ersten gassensitiven Schicht GSS1, die auf Tabakrauch reagiert und einer zweite gassensitiven Schicht Gss2, die auf Brandprodukte reagiert. Beispielhafterweise wird im Gassensor GS3 als erste gassensitive Schicht GSS1, die auf Tabakrauch reagiert, eine TiN-Schicht verwendet. Titannitrid reagiert auf das durch Tabakrauch (Zigarettenrauch, Tabakrauch, etc.) freigesetzte Ammoniak, z.B. in Form einer Austrittsarbeitsänderung, die über das Signal SIG1 der Auswerteeinheit AE2 weitergeleitet und dort analysiert wird. Prinzipiell ist als gassensitive Schicht GSS1 auch eine andere auf Tabakrauch reagierende Schicht verwendbar, wie z.B. Pd (Palladium) oder Rh (Rhodium). Prinzipiell kann der Gassensor GS3 auch mehrere auf Tabakrauch reagierende Schichten umfassen.

In der Darstellung gemäss Figur 2 umfasst die beispielhafte gassensitive Halbleitersensoreinrichtung GS3 (Gassensor) als zweite gassensitive Schicht GSS2, die auf Brandprodukte reagiert eine beispielhafte GaOx-Schicht (Galliumoxid). Prinzipiell ist als gassensitive Schicht GSS2 auch eine andere auf Brandprodukte (z.B. Brandrauch) reagierende Schicht verwendbar, wie z.B. CuPC (Kupferphthalocyanin). Prinzipiell kann der Gassensor GS3 auch mehrere auf Brandprodukte reagierende Schichten umfassen. Die, z.B. in Form von Austrittsarbeit, von der gassensitiven Schicht GSS2 erfassten Brandsignale SIG2 werden der Auswerteeinheit (CONTROL) AE2 weitergeleitet und dort analysiert. In der Auswerteeinheit AE2 (z.B. ein Mikrochip) werden die von der ersten GSS1 und der zweiten gassensitiven Schicht GSS2 gelieferten Signale SIG1 bzw. SIG2 erfasst und durch einen Vergleich der jeweiligen Signalmuster über die Zeit erfolgt eine Bestimmung, ob ein Tabakrauch CIG oder ein Brand FIRE vorliegt.

Der Tabakrauchmelder TRM2 umfasst Schnittstelle (SEND) SS2 zur signal- oder datentechnischen Verbindung mit einem Gefahrenmelder und/oder einer Gefahrenmeldezentrale Z und/oder einer Ausgabevorrichtung, insbesondere zur Übermittlung einer Information, ob Tabakrauch CIG oder eine erkannte Brandkenngrösse FIRE vorliegt. Über das Identifizierungssignal ID erkennt die zentrale Stelle Z (Gefahrenmeldezentrale, Brandmeldezentrale, Hotelmanagementsystem, etc.) von welchem Melder TRM2 ein solches Signal CIG bzw. FIRE abgesetzt wird und kann in der räumlichen Umgebung des Melders TRM2 entsprechende Massnahmen (z.B. Ausgabe von Warnsignalen) einleiten.

Von der Auswerteeinheit AE2 können aber bei Vorliegen von Tabakrauch CIG', CIG" bzw. Brandrauch FIRE', FIRE" lokale Ausgabevorrichtungen AV1 - AV4 (z.B. Blitzlampen, Lautsprecher) entsprechend angesteuert und aktiviert werden.

Die gassensitiven Schichten GSS1 bzw. GSS2 können prinzipiell auch in jeweils separaten Gassensoren untergebracht sein.

Figur 3 zeigt einen dritten beispielhaften erfindungsgemäßen Tabakrauchmelder TRM3 mit Ausgabevorrichtung AV5 am Melderscheitel. Der beispielhafte Tabakrauchmelder TRM3 umfasst ein Gehäuse GH (z.B. aus Kunststoff) mit Öffnungen OF durch die der Rauch zu den gassensitiven Schichten gelangen kann. Beim beispielhaften Tabakrauchmelder TRM3 ist als beispielhafte Ausgabevorrichtung AV5 ein direkt am Melderscheitel des Tabakrauchmelders TRM3 angebrachtes Display zur optischen Ausgabe eines Rauchverbotshinweises (z.B. als Blinklicht) vorgesehen. Der Tabakrauchmelder TRM3 umfasst somit eine am oder im Gehäuse GH angebrachte Ausgabevorrichtung AV5. Diese kompakte Bauweise erleichtert die Montage insbesondere durch Einsparung von Verkabelungsaufwand.

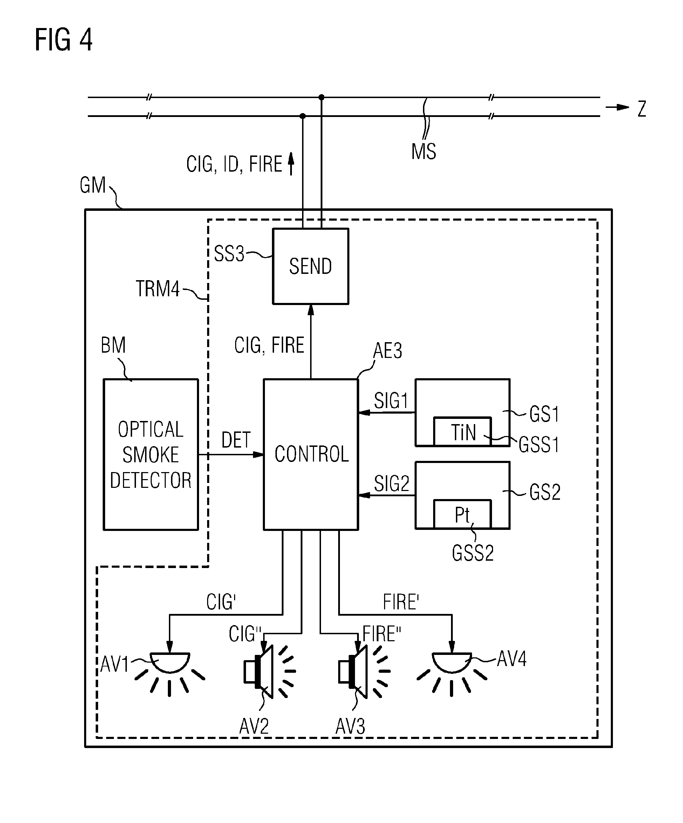

Figur 4 zeigt einen beispielhaften Gefahrenmelder GM (z.B. Brandmelder) mit integriertem erfindungsgemäßen Tabakrauchmelder TRM4, angeschlossen an einer Melderschleife MS. Der Gefahrenmelder GM ist über die Melderschleife MS mit einer zentralen Stelle Z (z.B. Brandmeldezentrale) verbunden. Der Gefahrenmelder GM gemäss Figur 4 umfasst einen Tabakrauchmelder TRM4 zur Erkennung von Tabakrauch und einen Brand- oder Rauchmelder BM zur Erkennung von Brandkenngrössen. Bei dem Brand- oder Rauchmelder (OPTICAL SMOKE DETEKTOR) BM kann es sich z.B. um einen optischen Brand- oder Rauchmelder handeln. Optische Brand- oder Rauchmelder weisen eine nach dem Streuprinzip arbeitende optische Detektoreinheit (optische Messkammer) zur Detektion von Rauchpartikeln auf.

Durch die Kombination bzw. Integration von Gefahrenmelder GM und Tabakrauchmelder TRM4 muss keine zusätzliche Montage vorgenommen werden. Weiterhin ist sichergestellt, dass der Gefahrenmelder GM keinen Fehlalarm aufgrund von Zigarettenrauch ausgibt. Weiterhin wird durch die Integration von Brandmelder BM und Tabakrauchmelder TRM4 die Ausfallsicherheit des Gefahrenmelders GM erhöht und ausserdem werden mehrere Brandkenngrössen erfasst. Dies erhöht insbesondere die Zuverlässige Detektion von Gefahren.

Der beispielhafte Tabakrauchmelder TRM4 gemäss der Darstellung in Figur 4 umfasst eine erste gassensitive Halbleitersensoreinrichtung GS1 mit einer gassensitiven Schicht GSS1, die auf Tabakrauch reagiert. Im beispielhaften Tabakrauchmelder TRM4 wird als gassensitive Schicht GSS1, die auf Tabakrauch reagiert, beispielhaft eine TiN-Schicht verwendet.

Weiterhin umfasst der beispielhafte Tabakrauchmelder TRM4 eine zweite gassensitive Halbleitersensoreinrichtung GS2 mit einer gassensitiven Schicht GSS2, die auf Brandprodukte reagiert. Beispielhafterweise umfasst die zweite gassensitive Halbleitersensoreinrichtung GS2 als gassensitiven Schicht GSS2, die auf Brandprodukte reagiert, eine Pt-Schicht (Platin).

Titannitrid und Platin reagieren beide auf den durch Tabakrauch freigesetzten Ammonikanteil. Da Titannitrid aber praktisch ausschliesslich auf Ammoniak reagiert und Platin auch auf Brandrauchgase, kann auch bei der Verwendung dieser chemischen Elemente als gassensitive Schichten GSS1 bzw. GSS2 durch die Auswerteeinheit (CONTROL) AE3 durch Analyse der Signalmuster SIG1 und SIG2 festgestellt werden, ob Tabak- oder Brandrauch vorliegt. Die Auswerteeinheit AE3 kann bei der Meldung, ob Tabakrauch CIG oder ein Brand FIRE vorliegt auch das Signal DET des Brandmelders BM verwerten. Erkannte Tabakrauchsignale CIG bzw. Brandsignale FIRE können über die Schnittstelle (SEND) SS3 und über die Melderschleife MS an eine zentrale Stelle Z (z.B. sicherheitsrelevante Brandmeldezentrale und/oder z.B. nicht-sicherheitsrelevantes Hotelmanagementsystem) gemeldet werden. Optional können von der Auswerteeinheit AE3 auch lokale Ausgabevorrichtungen AV1 bis AV4 bei der Erkennung von Tabakrauch und/oder Brand aktiviert werden.

Jede der gassensitiven Halbleitersensoreinrichtungen GS1 bzw. GS2 kann jeweils eine oder mehrere geeignete gassensitiven Schichten GSS1 bzw. GSS2 umfassen. Der beispielhafte Tabakrauchmelder TRM4 gemäss der Darstellung in Figur 4 enthält zwei Halbleitersensoreinrichtungen GS1 bzw. GS2. Es ist aber auch möglich, dass ein Tabakrauchmelder TRM4 nur eine Halbleitersensoreinrichtung GS1, GS1 enthält, wobei diese eine Halbleitersensoreinrichtung GS1, GS2 die gassensitiven Schichten GSS1 (zur Tabakraucherkennung) und GSS2 (zur Branderkennung) umfasst.

Die Ausgestaltung des beispielhaften Gefahrenmelders GM gemäss Figur 4 mit integriertem erfindungsgemäßen Tabakrauchmelder TRM4 und Brandmelder BM ermöglicht u.a. die einfache Montage von Tabakrauchmelder TRM4 und Brandmelder BM in einem Gehäuse des Gefahrenmelders GM.

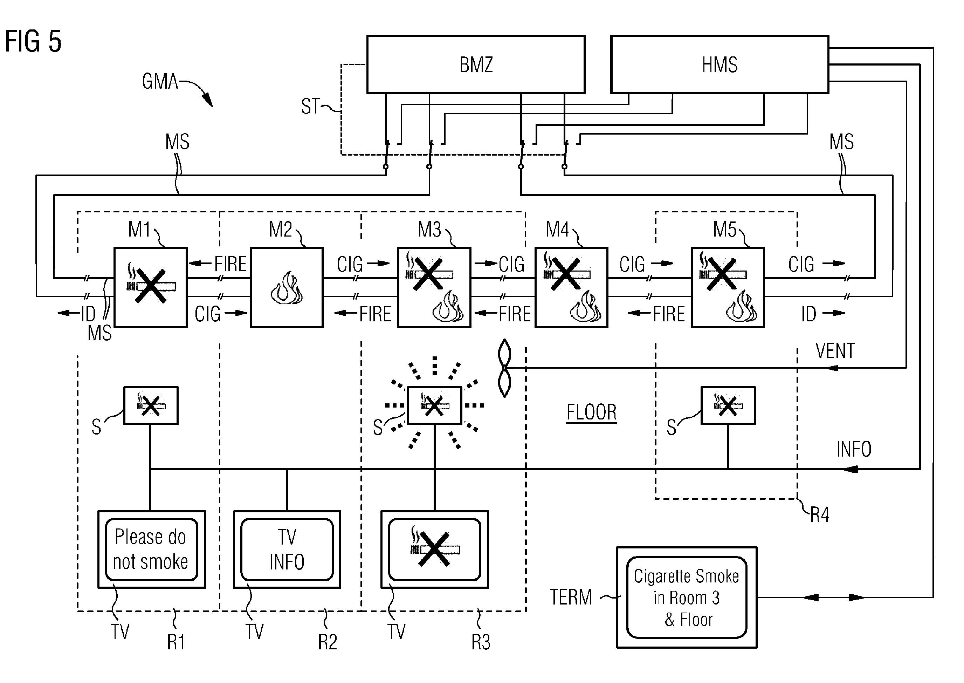

Figur 5 zeigt eine beispielhafte Gefahrenmeldeanlage GMA mit einer Alarmzentrale BMZ (z.B. Brandmeldezentrale), einer Melderschleife MS an der die Alarmzentrale BMZ und Gefahrenmelder M2 bis M5, insbesondere Brandmelder, angeschlossen sind, wobei an dieser Melderschleife MS zusätzlich zu den Gefahrenmeldern mindestens ein erfindungsgemässer Tabakrauchmelder M1 angeschlossen ist, wobei dem mindestens einem Tabakrauchmelder M1 eine zusätzliche Zentrale HMS zugeordnet ist, die eingerichtet ist, Signale von einem oder von mehreren Tabakrauchmeldern M1 zu analysieren und weiterhin eingerichtet ist, basierend auf den Signalen geeignete Massnahmen in der Umgebung eines Raumes R1 bis R4, in dem sich ein ein Signal absetzender Tabakrauchmelder M1 befindet, einzuleiten. Ein erfindungsgemässer Tabakrauchmelder kann auch in einem Gefahrenmelder mit einem Brandmelder integriert sein. In Figur 5 dargestellt durch die Symbolik ("Rauchverbotszeichen" und "Feuersymbol") an den Meldern M3 bis M5. Die Räume R1 bis R4 in denen sich die jeweiligen Melder M1 bis M5 sowie entsprechende Ausgabevorrichtungen S, TV befinden, sind durch gestrichelte Linien dargestellt.

Derartige Gefahrenmeldeanlagen GMA können insbesondere Brandmeldeanlagen mit einer Brandmeldezentrale BMZ und an einen die Melderschleife MS bildenden Bus angeschlossenen Brandmeldern und/oder Tabakrauchmeldern M1 bis M5 und ein an den Bus angeschlossenen Hotelmanagementsystem HMS sein. Bei Brandmeldeanlagen war es bisher nicht zulässig, auf der Melderschleife MS zusätzlich noch andere Gerate zu betreiben, weil man befürchtet hat, dass die Funktion der Brandmeldeanlage durch diese anderen Geräte beeinträchtigt werden könnte. Aber heutzutage sind die Melderschleifen MS robust und von der Bandbreite so ausgelegt, dass auch Worst-Case-Szenarien wie z.B. Meldungsschauer verarbeitet werden können. Dadurch dass die Alarmzentrale BMZ und die zusätzliche Zentrale HMS (z.B. Hotelmanagementsystem oder Hotelrezeption) und die einzelnen Melder M1 bis M5 durch eine einzige Melderschleife MS kommunizieren, wird der Verkabelungsaufwand verringert.

Die erfindungsgemässe Gefahrenmeldeanlagen GMA ermöglicht u.a. das Zusammenspiel von sicherheitsrelevanten (Gefahrenmelder mit oder ohne Tabakrauchmelder) und nicht sicherheitsrelevanten Geräten (z.B. reine Tabakrauchmelder) M1 an einem Bus MS mit einer Brandmeldezentrale BMZ und einer weiteren (nicht sicherheitsrelevanten) Zentrale HMS (z.B. Hotelmanagementsystem).

Durch eine Steuerleitung ST (vorzugsweise gesteuert durch die sicherheitsrelevante Brandmeldezentrale BMZ als Master) wird sichergestellt, dass die Kommunikation zwischen den Gefahrenmeldern und der Alarmzentrale BMZ und die Kommunikation zwischen den Tabakrauchmeldern und der zusätzlichen Zentrale HMS in verschiedenen Zeitfenstern erfolgt. Dadurch ist sichergestellt, dass auf der Melderschleife MS ein problemloser gleichzeitiger Betrieb von Gefahrenmeldern (z.B. Brandmeldern) und anderen Geräten wie z.B. Tabakrauchmeldern möglich ist.

Mit Vorteil sind Mittel zum wahlweisen Durchschalten der Melderschleife MS an einer der beiden Zentralen BMZ, HMS vorgesehen sind. Das Durchschalten der Melderschleife MS an eine der Zentralen BMZ, HMS erfolgt vorzugsweise durch ein von der Alarmzentrale BMZ gesteuertes Schaltmittel (z.B. durch einen Monitor-, Locking- oder Semaphormechanismus).

Mit Vorteil sind Mittel zum Behandeln der Meldungen der Gefahrenmelder mit Priorität und zum Unterdrücken des Durchschaltens der Melderschleife MS auf die zusätzliche Zentrale HMS vorgesehen sind. Die Meldungen von Gefahrenmeldern werden vorzugsweise mit Priorität behandelt und unterdrücken das Durchschalten der Melderschleife MS auf die mindestens eine andere zusätzliche Zentrale HMS. Meldungen eines Gefahrenmelders können z.B. ein Prioritätsbit enthalten, das von der Melderschleife MS abgefragt und erkannt wird. Bei Erkennen eines Prioritätsbits unterdrückt die Melderschleife MS bzw. die Brandmeldezentrale BMZ das Durchschalten von Meldungen von den anderen Geräten (z.B. Tabakrauchmelder).

Es ist auch möglich, dass die Priorität von Meldungen von Gefahrenmeldern und das Unterdrücken des Durchschaltens von Meldungen der anderen Geräte durch einen Synchronisationsmechanismus (z.B. mit Semaphoren, Locking oder Monitoren) realisiert wird.

Mit Vorteil handelt es sich bei der zusätzlichen Zentrale HMS um ein Hotelmanagementsystem handelt. Vom Hotelmanagementsystem HMS können direkt Massnahmen eingeleitet werden, wie z.B. benachrichtigen des Reinigungspersonals, dass in den entsprechenden Räumlichkeiten R1 bis R4 eine besondere Lüftung oder Ozonisation erforderlich ist. Eine andere Massnahme wäre z.B. das Vorbeischicken von Hotelpersonal, um auf das Rauchverbot hinzuweisen.

Mit Vorteil handelt es sich bei den geeigneten einzuleitenden Massnahmen um die Ausgabe eines Rauchverbothinweises und/oder um eine entsprechende Lüftungsmassnahme. Es kann z.B. in der entsprechenden Räumlichkeit R1 bis R4 bei der Detektion von Tabakrauch automatisch die Lüftung (Signal VENT) aktiviert werden oder ein Fenster geöffnet werden. Durch diese Lüftungsmassnahmen wird die Geruchsbelästigung gering gehalten und zusätzlich wird der Raucher auf sein Fehlverhalten aufmerksam gemacht.

Die Melder M1 bis M5 senden bei entsprechender Detektion entsprechende Signale CIG (Tabakrauch wurde erkannt) bzw. FIRE (eine Brandkenngrösse wurde erkannt) über die Melderschleife MS an eine oder an beide Zentralen BMZ bzw. HMS, wobei sichergestellt sein muss, dass Brandsignale FIRE immer mit Priorität behandelt werden und mit Priorität immer an die Brandmeldezentrale gesendet werden.

Bei den Ausgabevorrichtungen in Figur 5 handelt es sich beispielhaft um Fernsehmonitore TV (die sich sowieso schon in einem Hotelzimmer befinden können) bzw. Terminals TERM, um im Zimmer bzw. im Flur angebrachte Schilder S, auf denen textuelle Hinweise (z.B. "Please do not smoke" (Bitte Rauchen einstellen) oder "Cigarette Smoke in Room 3 & Floor" (Zigarettenrauch in Raum 3 und im Flur) oder Piktogramme (z.B. ein Rauchverbotszeichen) ausgegeben werden. Durch die einem Melder M1 bis M5 zugeordneten Identifizierungsnummer ID können durch die Zentralen BMZ, HMS dediziert im jeweiligen Raum R1 bis R4, in dem sich ein jeweiliger Melder M1 bis M5 befindet, geeignete Massnahmen eingeleitet werden.

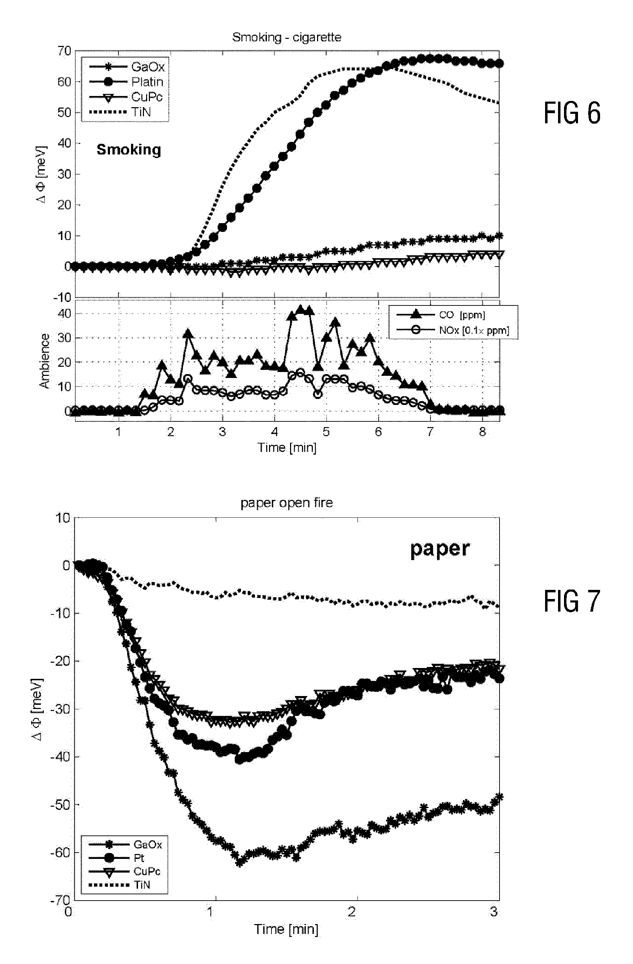

Figur 6 zeigt ein beispielhaftes Diagramm, das die Reaktion von vier unterschiedlichen gassensitiven (GasFET-)Sensorschichten (GaOx, Platin, CuPC, TiN) auf Tabakrauch ("Smoking - cigarette) darstellt. Im Diagramm gemäss Figur 6 wird in der Abszisse die Zeit dargestellt und auf der Ordinate die Reaktion der entsprechenden gassensitiven Schicht. Im Diagramm gemäss Figur 6 wird die Reaktion in der gemessenen Austrittsarbeit in meV dargestellt.

Während insbesondere TiN (Titannitrid) und Pt (Platin) starke positive Signale zeigen, reagieren insbesondere die CuPc-Schicht (Kupferphthalocyanin) und die GaOx-Schicht (Galliumoxid) nicht auf Tabakrauch.

Die Reaktionen für TiN (Titannitrid) und Pt (Platin) sind typisch für Tabakrauch (z.B. Zigarettenrauch) aber auch für brennende Wolle, da beide Schichten auf das jeweils enthaltene Ammoniak (NH3) reagieren. Die TiN-Schicht reagiert dabei praktisch ausschliesslich auf Ammoniak. Ziel ist es nun bei einem mit derartigen gassensitiven Sensoren (insb. Halbleitersensoren) ausgestatteten Gefahrenmelder Tabakrauch frühzeitig zu erkennen und möglichst eindeutig von einem echten Brand zu unterscheiden. Dies kann aufgrund des Ammoniak-Anteils bei Bränden mit Wolle schwierig sein, da Verwechslungsgefahr bestünde, wenn ausschliesslich die TiN-Schicht zur Auswertung herangezogen würde. Die Lösung besteht darin, dass eine zweite gassensitiven Schicht, die auf Brandprodukte reagiert, zur Auswertung mit herangezogen wird. Bei dieser weiteren Schicht kann es sich z.B. um Platin (Pt) und/oder Kupferphtalocyanin (CuPC) handeln. Dadurch wird auch auch die Erkennung eines echten Brandes sichergestellt.

Das Diagramm gemäss Figur 6 besteht aus einem oberen und einen unteren Abschnitt. Im oberen Abschnitt wird in der Abszisse die Zeit dargestellt und auf der Ordinate die Reaktion der entsprechenden gassensitiven Schichten. Im Diagramm gemäss Figur 6 wird die Reaktion in der gemessenen Austrittsarbeit in meV dargestellt.

Im unteren Abschnitt von Figur 6 wird auch in der Abszisse die Zeit dargestellt und auf der Ordinate die entsprechenden Umgebungsbedingungen (Ambience, Gaskonzentration) bezüglich CO und NOx. Die Gaskonzentration für CO ist dabei in [ppm] (parts per million) angegeben, die für NOx (Stickstoffoxid) in [0,1 x ppm].

Figur 7 zeigt ein beispielhaftes Diagramm, das die jeweilige Reaktion der auch in Figur 6 verwendeten (GasFET-)Sensorschichten (GaOx, Platin, CuPC, TiN) bei einem Papierbrand (paper open fire) darstellt. Im Diagramm gemäss Figur 7 wird in der Abszisse die Zeit dargestellt und auf der Ordinate die Reaktion der entsprechenden gassensitiven Schicht. Auch im Diagramm gemäss Figur 7 wird die Reaktion in der gemessenen Austrittsarbeit in meV dargestellt. Deutlich zu sehen sind die Reaktionen der Pt- GaOx- und CuPC-Schichten in negative Richtung. Grund für diese Reaktionen ist hierbei der N0₂-Anteil im gasförmigen Anteil der Brandprodukte. Die TiN-Schicht reagiert hierauf praktisch nicht.

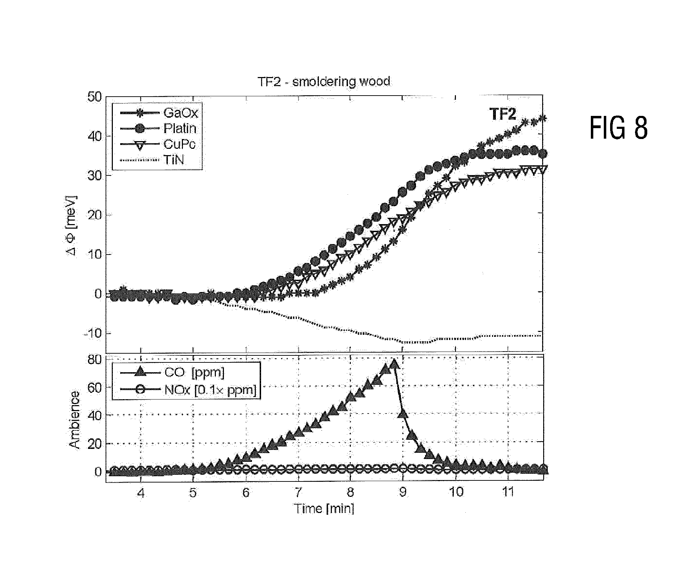

Figur 8 zeigt ein beispielhaftes Diagramm, das die Reaktion unterschiedlicher (GasFET-)Sensorschichten (GaOx, Platin, CuPC, TiN) bei einem typischen Holz-Schwelbrand (smoldering wood) darstellt. Wegen der bei einem Schwelbrand unvollständigen Verbrennung entsteht hier hauptsachlich CO (Kohlensauerstoff). Die Pt- GaOx- und CuPC-Schichten reagieren hier mit einer positiven Reaktion. Nur die TiN-Schicht reagiert auch hier praktisch nicht.

Da die CuPC-Schicht nur wenig bis gar nicht auf Tabakrauch reagiert (hier nicht gezeigt), kann auf diese Art zumindest Tabakrauch erkannt werden.

Ein Ausschluss schwelender Schafwolle ist hierbei in der Frühphase nicht sicher möglich - brennt die Schafwolle aber mit offener Flamme, lasst sich dies wiederrum eindeutig über den N0₂-Anteil (Reaktion von CuPC) nachweisen.

Das Diagramm gemäss Figur 8 besteht aus einem oberen und einen unteren Abschnitt. Im oberen Abschnitt wird in der Abszisse die Zeit dargestellt und auf der Ordinate die Reaktion der entsprechenden gassensitiven Schichten. Auch im Diagramm gemäss Figur 8 wird die Reaktion in der gemessenen Austrittsarbeit in meV dargestellt.

Im unteren Abschnitt von Figur 8 wird auch in der Abszisse die Zeit dargestellt und auf der Ordinate die entsprechenden Umgebungsbedingungen (Ambience, Gaskonzentration) bezüglich CO und NOx. Die Gaskonzentration für CO ist dabei in [ppm] (parts per million) angegeben, die für NOx (Stickstoffoxid) in [0,1 x ppm].

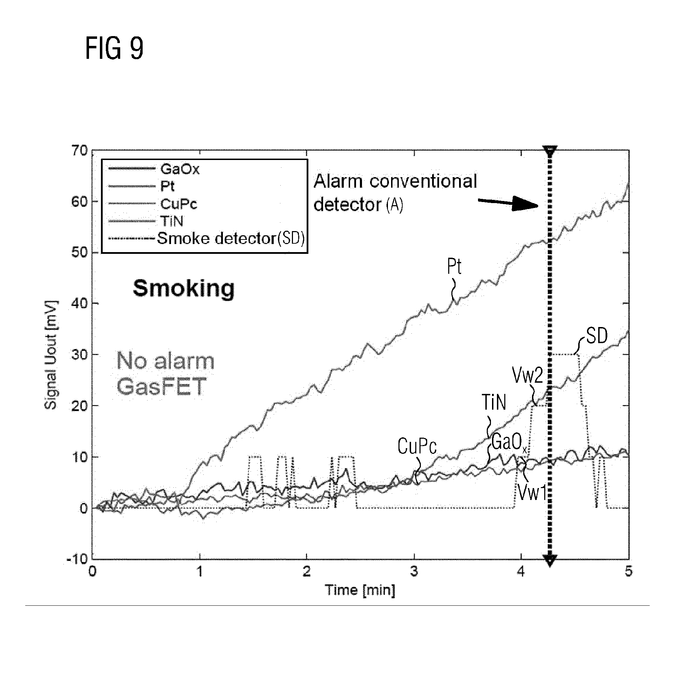

Figur 9 zeigt ein beispielhaftes Diagramm mit Signalmustern von unterschiedlichen (GasFET-)Sensorschichten (GaOx, Platin, CuPC, TiN) und eines konventionellen Brandmelders SD (Smoke Detektor) zur Unterscheidung von Tabakrauch (Smoking) von einem echten Brand. Die Darstellung gemäss Figur 9 zeigt das Signal bzw. das Signalmuster des erfindungsgemässen Tabakrauchmelders im Vergleich zu einem konventionellen optischen Rauchmelder (Smoke Detektor SD). Auf der X-Achse ist die Zeit, auf der Y-Achse das Signal (Uout in mV) der jeweiligen Schichten aufgetragen.

Ab Minute 3 steigt aufgrund des Ammoniak Anteils des Tabakrauchs auch das Signal der TiN-Schicht des dem Tabakrauchmelder zugrundeliegenden gassensitiven Feldeffekttransistors. Auch das Signal der Pt-Schicht steigt an, das der anderen Schichten (CuPC, GaOx) verändert sich jedoch praktisch nicht. Dieses Signalmuster ist eindeutig für Tabakrauch (Smoking). Der konventionelle Rauchmelder SD kann hier nicht vom Rauch eines echten Brandes unterscheiden und alarmiert (A; Alarm conventional detector), nach durchbrechen einiger Vorwarnstufen VW1, VW2 ab Signalwert 30.

Der Zeitpunkt (ca. 4min 30sec) ab welchem der konventionelle Rauchmelder SD einen Alarm A absetzt ist durch die fettgepunktete vertikale Pfeillinie dargestellt. Im zeitlichen Abschnitt links der fettgepunkteten vertikalen Pfeillinie erfolgt kein Alarm durch die gassensitiven Feldeffekttransistoren (No alarm GasFET).

Hier kann also der vorliegende erfindungsgemässe Tabakrauchmelder zur Vermeidung von Fehlalarmen dienen.

Mit Vorteil erfolgt die Analyse der Signalmuster der gassensitiven Sensorschichten durch einen dafür eingerichteten Mikroprozessor (Chip) im Melder.

Mit Vorteil ist der erfindungsgemässe Tabakrauchmelder unterstützend mit einem Brandmelder oder einer Alarmzentrale verbunden.

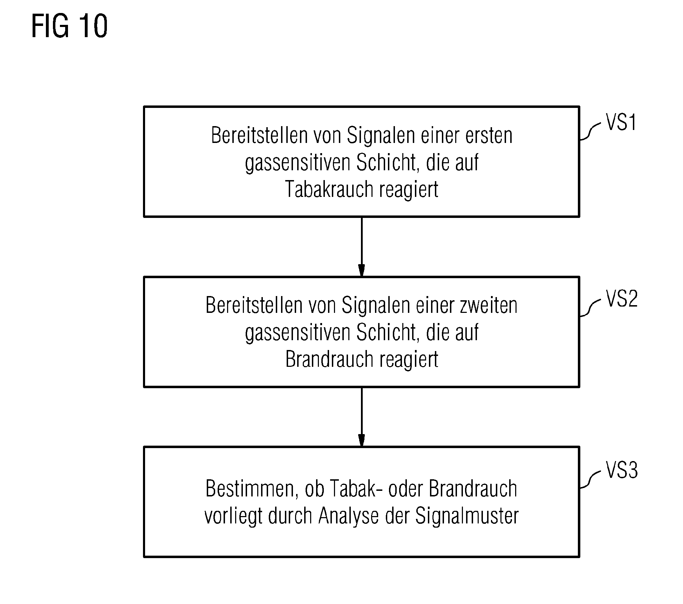

Figur 10 zeigt ein beispielhaftes Ablaufdiagramm für das erfindungsgemässe Verfahren zur Unterscheidung von Tabakrauch und Brandrauch, wobei Signale einer ersten gassensitiven Beschichtung, die auf Tabakrauch reagiert, erfasst werden (VS1); wobei weiterhin Signale einer zweiten gassensitiven Beschichtung, die auf Brand reagiert, erfasst werden (VS2); und wobei basierend auf den von der ersten und der zweiten gassensitiven Beschichtung gelieferten Signalmustern durch eine Auswerteeinheit bestimmt wird, ob ein Tabakrauch und/oder ein Brandrauch vorliegt (VS3), wobei die erste gassensitive Beschichtung (z.B. TiN) auf Ammoniak reagiert und die zweite gassensitive Beschichtung (z.B. CuPC) auch auf andere Brandgaskomponenten reagiert.

Mit Vorteil ist die erste gassensitive Beschichtung eine TiN-Schicht und die zweite gassensitive Beschichtung durch eine Schicht aus organischen Porphinfarbstoffen und/oder eine Schicht aus organischen Polymeren und/oder anorganischen Stoffen gebildet.

Mit Vorteil handelt es sich bei den anorganischen Stoffen um Oxide und/oder Karbonate und/oder Phosphate und/oder Halogenide und/oder Metalle.

Mit Vorteil handelt es sich bei den Metallen um Platin und/oder Palladium und/oder Gold und/oder Nickel und/oder Rhodium.

Tabakrauchmelder mit einer gassensitiven Halbleitersensoreinrichtung (insb. GasFET-Sensor) mit einer ersten gassensitiven Schicht, die auf Tabakrauch reagiert und einer zweiten gassensitiven Schicht, die auf Brandprodukte reagiert, sowie einer Auswerteeinheit (z.B. Mikrochip) zur Analyse der von der ersten und der zweiten gassensitiven Schicht gelieferten Signale und zur Bestimmung, ob ein Tabakrauch vorliegt. Optional umfasst der Tabakrauchmelder eine Schnittstelle zur signal- oder datentechnischen Verbindung mit einem Gefahrenmelder und/oder einer Gefahrenmeldezentrale und/oder einer Ausgabevorrichtung, insbesondere zur Übermittlung einer Information, ob Tabakrauch vorliegt. Optional kann der Tabakrauchmelder in einen konventionellen Gefahrenmelder (z.B. Brandmelder) operativ integriert werden.

### Bezugszeichenliste

- TRM1 - TRM3: Tabakrauchmelder
- AE1 - AE3: Auswerteeinheit
- AV1-AV5, TV, TERM, S: Ausgabevorrichtung
- GS1, GS2: Halbleitersensoreinrichtung
- GSS1, GSS2: Gassensitive Schicht
- SS1 - SS3: Schnittstelle
- MS: Melderschleife
- Z: Leitstelle
- VENT: Lüftungssignal
- SIG1, SIG2: Signal
- ID: Identifizierungssignal
- CIG, CIG', CIG": Tabakrauchsignal
- FIRE, FIRE', FIRE": Brandsignal
- GH: Gehäuse
- OF: Öffnung
- BM: Brandmelder
- BMZ: Brandmeldezentrale
- HMS: Hotelmanagementsystem
- GMA: Gefahrenmeldeanlage
- ST: Steuerleitung
- R1 - R4: Raum
- M1 - M5: Melder
- VS1 - VS3: Verfahrensschritt
- A: Alarmsignal
- VW1, VW2: Vorwarnstufen

## Patentansprüche

1. Tabakrauchmelder (TRM1 - TRM3), umfassend:
eine gassensitive Halbleitersensoreinrichtung (GS1, GS2) mit einer ersten gassensitiven Schicht (GSS1), die auf Tabakrauch reagiert und einer zweiten gassensitiven Schicht (GSS2), die auf Brandprodukte reagiert;
eine Auswerteeinheit (AE1 - AE3) zur Analyse der von der ersten und der zweiten gassensitiven Schicht (GSS1, GSS2) gelieferten Signale und zur Bestimmung, ob ein Tabakrauch vorliegt; und
eine Schnittstelle (SS1 - SS3) zur signal- oder datentechnischen Verbindung (MS) mit einem Gefahrenmelder (M1 - M5) und/oder einer Gefahrenmeldezentrale (Z, BMZ, HMS) und/oder einer Ausgabevorrichtung (AV1 - AV5, TV, TERM, S), insbesondere zur Übermittlung einer Information, ob Tabakrauch vorliegt.

2. Tabakrauchmelder (TRM1 - TRM3) nach Anspruch 1, wobei die erste gassensitive Schicht (GSS1) eine TiN-Schicht und/oder eine Pd-Schicht und/oder eine Rh-Schicht und/oder eine Pt-Schicht aufweist.

3. Tabakrauchmelder (TRM1 - TRM3) nach Anspruch 1 oder 2, wobei die zweite gassensitive Schicht (GSS2) eine GaOx- und/oder eine CuPC-Schicht aufweist.

4. Tabakrauchmelder (TRM1 - TRM3) nach Anspruch 1, wobei die erste gassensitive Schicht (GSS1) eine TiN-Schicht und die zweite gassensitive Schicht (GSS2) eine GaOx-Schicht und/oder eine CuPC-Schicht und/oder eine Pd-Schicht und/oder eine Rh-Schicht und/oder eine Pt-Schicht aufweist.

5. Tabakrauchmelder (TRM1 - TRM3) nach einem der vorherigen Ansprüche, weiter umfassend eine Ausgabeeinheit (AV1 - AV5) zur optischen und/oder akustischen Ausgabe eines Rauchverbothinweises.

6. Tabakrauchmelder (TRM1 - TRM3) nach einem der vorherigen Ansprüche, wobei der Tabakrauchmelder (TRM1 - TRM3) beim Erkennen von Tabakrauch entsprechende Lüftungsmassnahmen in der Umgebung des Raumes (R1 - R4), in dem sich der Tabakrauchmelder (TRM1 - TRM3) befindet, einleitet.

7. Tabakrauchmelder (TRM1 - TRM3) nach einem der vorherigen Ansprüche, wobei der Tabakrauchmelder (TRM1 - TRM3) in einem Gefahrenmelder (M1 - M5) zur Erkennung von Gefahren in einem Gebäude (R1 - R4) integriert ist.

8. Gefahrenmelder, insbesondere Punktmelder, zur Erkennung von Gefahrensituationen in einem Gebäude (R1 - R4), umfassend einen Tabakrauchmelder (TRM1 - TRM3) nach einem der Ansprüche 1 bis 6.

9. Gefahrenmelder nach Anspruch 8, wobei es sich beim Gefahrenmelder (M1 - M5) um einen Brandmelder (BM) handelt, der eine optische Messkammer aufweist.

10. Gefahrenmeldeanlage (GMA) mit einer Alarmzentrale (BM2), einer Melderschleife (MS) an der die Alarmzentrale (BMZ) und Gefahrenmelder (M1 - M5), insbesondere Brandmelder, angeschlossen sind, wobei an dieser Melderschleife (MS) zusätzlich zu den Gefahrenmeldern mindestens ein Tabakrauchmelder (TRM1 - TRM3) nach einem der Ansprüche 1 bis 7 angeschlossen ist, wobei dem mindestens einem Tabakrauchmelder (TRM1 - TRM3) eine zusätzliche Zentrale (HMS) zugeordnet ist, die eingerichtet ist, Signale von einem oder von mehreren Tabakrauchmeldern (TRM1 - TRM3) zu analysieren und weiterhin eingerichtet ist, basierend auf den Signalen geeignete Massnahmen in der Umgebung eines Raumes (R1 - R4), in dem sich ein ein Signal absetzender Tabakrauchmelder (TRM1 - TRM3) befindet, einzuleiten.

11. Gefahrenmeldeanlage (GMA) nach Anspruch 10, wobei die Kommunikation zwischen den Gefahrenmeldern (M1 - M5) und der Alarmzentrale (BMZ) und die Kommunikation zwischen den Tabakrauchmeldern (TRM1 - TRM3) und der zusätzlichen Zentrale (HMS) in verschiedenen Zeitfenstern erfolgt.

12. Gefahrenmeldeanlage (GMA) nach Anspruch 10 oder 11, wobei Mittel zum wahlweisen Durchschalten der Melderschleife (MS) an einer der beiden Zentralen (BMZ, HMS) vorgesehen sind.

13. Gefahrenmeldeanlage (GMA) nach einem der Ansprüche 10 bis 12, wobei Mittel zum Behandeln der Meldungen der Gefahrenmelder (M1 - M5) mit Priorität und zum Unterdrücken des Durchschaltens der Melderschleife (MS) auf die zusätzliche Zentrale (HMS) vorgesehen sind.

14. Gefahrenmeldeanlage (GMA) nach einem der Ansprüche 10 bis 13, wobei es sich bei der zusätzlichen Zentrale um ein Hotelmanagementsystem (HMS) handelt.

15. Verfahren zur Unterscheidung von Tabakrauch und Brandrauch, wobei Signale (SIG1) einer ersten gassensitiven Beschichtung (GSS1), die auf Tabakrauch reagiert, erfasst werden; wobei weiterhin Signale (SIG2) einer zweiten gassensitiven Beschichtung (GSS2), die auf Brand reagiert, erfasst werden; und wobei basierend auf den von der ersten und der zweiten gassensitiven Beschichtung gelieferten Signalmustern (SIG1, SIG2) durch eine Auswerteeinheit (AE1 - AE3) bestimmt wird, ob ein Tabakrauch und/oder ein Brandrauch vorliegt, **dadurch gekennzeichnet, dass**
die erste gassensitive Beschichtung (GSS1) auf Ammoniak reagiert;
und die zweite gassensitive Beschichtung (GSS2) auch auf andere Brandgaskomponenten reagiert.

16. Verfahren nach Anspruch 15, wobei die erste gassensitive Beschichtung (GSS1) eine TiN-Schicht und die zweite gassensitive Beschichtung (GSS2) durch eine Schicht aus organischen Porphinfarbstoffen und/oder eine Schicht aus organischen Polymeren und/oder anorganischen Stoffen gebildet ist.

17. Verfahren nach Anspruch 16, wobei es sich bei den anorganischen Stoffen um Oxide und/oder Karbonate und/oder Phosphate und/oder Halogenide und/oder Metalle handelt.

18. Verfahren nach Anspruch 17, wobei es sich bei den Metallen um Platin und/oder Palladium und/oder Gold und/oder Nickel und/oder Rhodium handelt.
